# EUROPEAN PATENT SPECIFICATION

(11) **EP 3 519 183 B1**
(45) Date of publication and mention of the grant of the patent: **17.09.2025**
(21) Application number: 17855183.4
(22) Date of filing: 28.09.2017
(51) Int. Cl.: B32B 15/20, B32B 15/08, B32B 15/085

(54) **MULTILAYER FILM AND FOIL BASED LAMINATE**
MEHRSCHICHTIGES FILM- UND FOLIENBASIERTES LAMINAT
FILM MULTICOUCHE ET STRATIFIÉ À BASE D'UNE FEUILLE MÉTALLIQUE

(30) Priority: 28.09.2016 IN 201621033214
(43) Date of publication of application: 07.08.2019
(73) Proprietor: Essel Propack Ltd., Maharashtra 400 013 (IN)
(72) Inventor: BANERJEE, Mrinal Kanti, Mumbai 400013 (IN)
(74) Representative: Lavoix
(86) International application number: PCT/IN2017/050432
(87) International publication number: WO 2018/061028

(56) References cited:
- CA-A1- 2 942 692
- US-A- 5 605 568
- US-A1- 2005 031 814
- US-A1- 2014 087 617
- US-B2- 7 824 749
- US-B2- 7 824 749

## Description

### TECHNICAL FIELD OF THE INVENTION

The subject matter described herein in general relates to an aluminium tube container and flexible laminated tube container, including multi-layer barrier film for applications in which relatively high collapsibility and restricted resilience is required, and a method for its manufacture. The multilayer film laminate comprises a printable film layer; a first aluminium layer between first co-extruded bond layer and second mono-extruded bond layer, wherein the first co-extruded bond layer is between the printable film layer and the first aluminium layer; a second aluminium layer is between second mono-extruded and third co-extruded bond layers; and a sealant layer adjacent to the third co-extruded layer, the first and second aluminium layer independently have a thickness in the range of 9-20 microns.

### BACKGROUND OF THE INVENTION

Aluminium metal tube containers are the traditional mode of packaging for Pharma, Food, cosmetics and industrial products. However, when an aggressive product formulation need to be packed inside the aluminium tube container, inner walls of the aluminium tube has to be coated with Epoxy lacquer suitably. As Epoxy lacquer associated with 'Bisphenol-A Diglycidyl Ether or BADGE is known to be associated with health concern, there is a need for an alternate safe packaging container for Pharma, Food, cosmetics and industrial products. Multilayer film laminated tubes comprising aluminium foil are being used for packaging of cosmetics, food, pharmaceutical formulations, and perishable products. Each layer of the laminate adds certain desired physical or chemical properties to the completed film. Traditionally, multilayer film laminated tubes are designed with high resilience. Tube with better resilience will maintain the tube shape even after multiple squeezes by the consumer to dispense the product filled inside the tubes. The high resilience laminated tube is appealing to the consumer; however, the air occupying the space created by dispensed product accelerates the degradation of air-sensitive or oxygen sensitive product in the tube.

Fully collapsible containers reduce the exposure of the filled product to air and are widely used for packaging pharmaceutical products, dentifrice, cosmetics, and perishable products. Containers with collapsibility and less elastic effect can be made by either increasing the metal foil thickness or by using specific polymer coating which have inherent drawbacks. For example, using metal foil of higher thickness and less polymeric film coating, the tube stiffness can be increased there by reduced tube resilience whereas less polymer coating on the foil adversely affect the tube integrity in conjunction with filled aggressive product formulation, i.e., the active ingredients in the formulation inside the container migrate through the thin polymeric layer and attack the metal foil thereby reducing the quality, the shelf life, and the resistivity to oxygen and humidity of said formulation.

On the other hand, the highly crystalline polymer, such as, high density polyethylene (HDPE) or polypropylene (PP) coating on the metal foil though restricts the migration of the active ingredients in the formulation but at the same time it also enhances the tube resilience. US 2005/031814 and US 7,824,749 relate to a heat-sealable peelable multi-layer laminated polymeric film comprising a polymeric substrate layer having on one side thereof a polymeric heat-sealable peelable layer and having on the opposite side thereof a polymeric shrinkable layer. CA 2,942,692 relates to a packaging film made of an at least monoaxially stretched multi-layered plastic film consisting of up to 50 wt.-% of polyolefin. US 5,605,568 relates to a CaCO₃-talc coating pigment slurry consisting of CaCO₃, talc, H₂O, and an adjuvant combination, wherein the coating pigment slurry can be used to special advantage to prepare a composition for coating papers for gravure printing. US 2014/087617 relates to a laminate having excellent bond strength, and comprising a tempered aluminum layer comprising aluminum and at least one of cobalt, copper, lithium, magnesium, manganese, nickel, platinum, and silicon, and a poly(aryl ether ketone) layer, wherein at least a portion layer and the poly(aryl ether ketone) layer are in direct contact.

Thus, there is a need to develop a suitable high barrier multilayer film laminated tube container with higher collapsibility and less resilience effect.

### SUMMARY

The present disclosure relates to a multilayer film laminate comprising: a printable film layer; a first aluminium layer between first co-extruded bond layer and second mono-extruded bond layer, wherein the first co-extruded bond layer is between the printable film layer and the first aluminium layer; a second aluminium layer is between second mono-extruded and third co-extruded bond layers; and a sealant layer adjacent to the third co-extruded layer, wherein the first and second aluminium layer independently have a thickness in the range of 9-20 microns.

The present disclosure relates to the multilayer film laminate comprising: a printable film layer having thickness in the range of 60-80 microns, comprising a blend of medium density polyethylene with a density in the range of 0.925 g/cc to 0.94 g/cc, linear low density polyethylene with a density in the range of 0.925 g/cc to 0.96 g/cc, and colorant master batch; a first co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; a first aluminium layer having thickness in the range of 9-20 microns; a second mono-extruded bond layer having thickness in the range of 20-40 microns, and is selected from the group consisting of ethylene acrylic acid (EAA), ethylene methacrylic acid (EMAA) with acrylic acid co-monomer weight percentage range 6.0 to 12.0 and a melt flow index in the range of 7.0 g/10 min to 15.0 g/10 min; a second aluminium layer having thickness in the range of 9-20 microns; a third co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min, and a sealant layer having thickness in the range of 60-80 microns, comprising a blend of medium density polyethylene with a density in the range of 0.925 g/cc to 0.94 g/cc, linear low density polyethylene with a density in the range of 0.925 g/cc to 0.96 g/cc, and colorant master batch.

The present disclosure relates to the multilayer film laminate comprising: a printable film layer comprising: first layer comprising a blend of medium density polyethylene with a density in of 0.933 g/cc, linear low density polyethylene with a density of 0.935 g/cc and a colorant master batch having a weight percentage in the range of 0-10% of said blend; second layer comprising a blend of medium density polyethylene with a density in of 0.933 g/cc and colorant master batch having a weight percentage in the range of 0-10% of said polyethylene polymer; and third layer comprising a blend of medium density polyethylene with a density in of 0.933 g/cc, linear low density polyethylene with a density of 0.935 g/cc and a colorant master batch having a weight percentage in the range of 0-10% of said blend, wherein the printable film layer thickness is 75 microns; a first co-extruded bond layer having thickness of 30 microns, comprising a primary layer of ethylene acrylic acid (EAA) and a secondary layer of linear low density polyethylene (LLDPE) with high melt flow index of 15.0 g/10 min; a first aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; a second mono-extruded bond layer of ethylene acrylic acid (EAA) with a melt flow index of 10.0 g/10 min having thickness of 30 microns; a second aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; a third co-extruded bond layer having thickness of 30 microns, comprising a primary layer s of ethylene acrylic acid (EAA) and a secondary layer of linear low density polyethylene (LLDPE) with high melt flow index of 15.0 g/10 min; and a sealant layer comprising: first layer comprising a blend of medium density polyethylene with a density in of 0.933 g/cc, and linear low density polyethylene with a density of 0.935 g/cc; second layer comprising a blend of medium density polyethylene with a density in of 0.933 g/cc; and third layer comprising a blend of medium density polyethylene with a density in of 0.933 g/cc, and linear low density polyethylene with a density of 0.935 g/cc.

The present disclosure relates to a process of manufacturing the multilayer film laminate of the present invention, said process comprising the steps of: obtaining a printable film layer and a sealant layer; contacting the printable film layer with a first co-extruded bond layer comprising a blend of EAA and low density polyethylene (LDPE), and a first aluminum layer, to obtain a composite semi-laminate; contacting the composite semi-laminate with a second co-extruded bond layer consisting of EAA and second aluminum layer to obtain a semi-laminated substrate; contacting the semi-laminated substrate with a third co-extruded bond layer comprising EAA and low density polyethylene and a sealant layer to obtain a premade multilayer film laminate; and cooling and compressing the a premade multilayer film laminate to obtain the multilayer film laminate.

These and other features, aspects and advantages of the present subject matter will be better understood with reference to the following description and appended claims. This summary is provided to introduce a selection of concepts in a simplified form.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates a multilayer film laminate comprising aluminium foil layers as the barrier layer, according to an implementation of the present disclosure
Figure 2 illustrates a process flow for the preparation of a multilayer film laminate, according to an implementation of the present disclosure.
Figure 3 illustrates a pictorial representation of tube compression and bounce back bounce back force measurement.
Figure 4 illustrates a pictorial representation of tube compression and bounce back bounce back force measurement.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively and any and all combinations of any or more of such steps or features.

### Definitions

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. Throughout this specification, unless the context requires otherwise the word "comprise", and variations, such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

As discussed above, a laminated tube container with desired stiffness and resilience effect is required for packaging various active products related to pharmaceuticals, dentifrice, cosmetics, toiletries and the like. However, to increase the tube stiffness or restricted resilience effect, the prior art provides the solution either by increasing the metal foil thickness or by coating the metal foil with high crystalline polymer. Both the cases, include its own drawbacks such as layer delamination, difficult product squeezability, i.e. dispensing and creasing of the laminate body. The present disclosure provides a solution to the above discussed problems by providing a multilayer film laminate with the inherent property of high collapsibility, excellent laminate integrity and excellent aesthetics

In one implementation, the present disclosure relates to a multilayer film laminate comprising: a printable film layer; a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer, wherein the first and second aluminium layer independently have a thickness in the range of 9-20 microns.

In one implementation, the printable film layer is a multilayer film.

In one implementation, the printable film layer comprises of 3-7 layers.

In one implementation, the present disclosure relates to the multilayer film laminate comprising a printable film layer comprising first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer, wherein the first and second aluminium layer independently have a thickness in the range of 9-20 microns.

In one implementation, the present disclosure relates to the multilayer film laminate as described herein, wherein the first layer and the third layer of the printable film layer is a blend of medium density polyethylene (MDPE), linear low density polyethylene (LLDPE), and a colorant master batch with a blend ratio in the range of 70:20: 10 to 20:70:10.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the first layer and the third layer of the printable film layer is a blend of medium density polyethylene (MDPE), linear low density polyethylene (LLDPE), and a colorant master batch with a blend ratio in the range of 70:20: 10 to 20:70:10.

In one implementation, the present disclosure relates to the multilayer film laminate as described herein, wherein the first layer and the third layer of the printable film layer is a blend of medium density polyethylene (MDPE), and linear low density polyethylene (LLDPE) with a blend ratio in the range of 70:30 to 30:70.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the first layer and the third layer of the printable film layer is a blend of medium density polyethylene (MDPE), and linear low density polyethylene (LLDPE) with a blend ratio in the range of 70:30 to 30:70.

In one implementation, the present disclosure relates to the multilayer film laminate as described herein, wherein the first layer and the third layer of the printable film layer is a blend of high density polyethylene (HDPE), and linear low density polyethylene (LLDPE) with a blend ratio of 50:50.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the first layer and the third layer of the printable film layer is a blend of high density polyethylene (HDPE), and linear low density polyethylene (LLDPE) with a blend ratio of 50:50.

In one implementation, the present disclosure relates to the multilayer film laminate as described herein, wherein the second layer of the printable film layer is a blend of medium density polyethylene (MDPE), and linear low density polyethylene (LLDPE) with a blend ratio in the range of 70:30 to 30:70.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the second layer of the printable film layer is a blend of medium density polyethylene (MDPE), and linear low density polyethylene (LLDPE) with a blend ratio in the range of 70:30 to 30:70.

In one implementation, the present disclosure relates to the multilayer film laminate as described herein, wherein the second layer of the printable film layer is medium density polyethylene (MDPE).

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the second layer of the printable film layer is medium density polyethylene (MDPE).

In one implementation, the sealant layer is a multilayer film.

In one implementation, the sealant layer comprises of 3-7 layers.

In one implementation, the present disclosure relates to the multilayer film laminate as described herein, wherein the sealant layer comprises of: first layer comprising a blend of at least two polyethylene polymers; second layer comprising at least one polyethylene polymer; and third layer comprising a blend of at least two polyethylene film.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers; second layer comprising at least one polyethylene polymer; and third layer comprising a blend of at least two polyethylene film, wherein the first and second aluminium layer independently have a thickness in the range of 9-20 microns.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the first and second aluminium layer independently have a thickness in the range of 9-20 microns. In one implementation, the present disclosure relates to the multilayer film laminate comprising a sealant layer as described herein, wherein the first layer and the third layer of the sealant layer is a blend of medium density polyethylene (MDPE), linear low density polyethylene (LLDPE), and a colorant master batch with a blend ratio in the range of 70:20:10 to 20:70:10.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of medium density polyethylene (MDPE), linear low density polyethylene (LLDPE), and a colorant master batch with a blend ratio in the range of 70:20:10 to 20:70:10; second layer comprising at least one polyethylene polymer and a colorant master batch having a weight percentage in the range of 0-10% of said polyethylene polymer; and third layer comprising a blend of medium density polyethylene (MDPE), linear low density polyethylene (LLDPE), and a colorant master batch with a blend ratio in the range of 70:20:10 to 20:70:10, wherein the first and second aluminium layer independently have a thickness in the range of 9-20 microns.

In one implementation, the present disclosure relates to the multilayer film laminate comprising a sealant layer as described herein, wherein the first layer and the third layer of the sealant layer is a blend of medium density polyethylene (MDPE), and linear low density polyethylene (LLDPE) with a blend ratio in the range of 70:30 to 30:70.

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the first layer of the sealant film layer is a blend of medium density polyethylene (MDPE), and linear low density polyethylene (LLDPE) with a blend ratio in the range of 70:30 to 30:70.

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the third layer of the sealant film layer is a blend of medium density polyethylene (MDPE), and linear low density polyethylene (LLDPE) with a blend ratio in the range of 70:30 to 30:70.

In one implementation, the present disclosure relates to the multilayer film laminate comprising a sealant layer as described herein, wherein the first layer and the third layer of the sealant layer is a blend of high density polyethylene (HDPE), and linear low density polyethylene (LLDPE) with a blend ratio of 50:50.

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the first layer of the sealant film layer is a blend of high density polyethylene (HDPE), and linear low density polyethylene (LLDPE) with a blend ratio of 50:50.

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the third layer of the sealant film layer is a blend of high density polyethylene (HDPE), and linear low density polyethylene (LLDPE) with a blend ratio of 50:50.

In one implementation, the present disclosure relates to the multilayer film laminate comprising a sealant layer as described herein, wherein the second layer of the sealant layer is a blend of medium density polyethylene (MDPE), and linear low density polyethylene (LLDPE) with a blend ratio in the range of 70:30 to 30:70.

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the second layer of the sealant film layer is a blend of medium density polyethylene (MDPE), and linear low density polyethylene (LLDPE) with a blend ratio in the range of 70:30 to 30:70.

In one implementation, the present disclosure relates to the multilayer film laminate comprising a sealant layer as described herein, wherein the second layer of the sealant layer is medium density polyethylene (MDPE).

In one implementation, the present disclosure relates to the multilayer film laminate comprising a sealant layer comprises first layer comprising a blend of at least two polyethylene polymers; second layer comprising at least one polyethylene polymer; and third layer comprising a blend of at least two polyethylene film, wherein the second layer of the sealant film layer is medium density polyethylene (MDPE).

In another implementation, the colorant master batch is selected from the group consisting of titanium dioxide (TiO₂), zinc disulfide (ZnS₂), zinc oxide (ZnO), barium sulfate (BaSO₄), calcium carbonate (CaCO₃), and combinations thereof.

In another implementation, the colorant master batch is of titanium dioxide (TiO₂).

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the colorant master batch is titanium dioxide, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers; second layer comprising at least one polyethylene polymer; and third layer comprising a blend of at least two polyethylene film, wherein the first and second aluminium layer independently have a thickness in the range of 9-20 microns.

In another implementation, the colorant master batch has titanium dioxide (TiO₂) loading in the range of 50% to 75% with a particle size in the range of 0.15 micro meters to 0.35 micro meters.

In another implementation, the colorant master batch has titanium dioxide (TiO₂) loading in the range of 50% to 75%.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the colorant master batch have titanium dioxide (TiO₂) loading in the range of 50% to 75%, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers; second layer comprising at least one polyethylene polymer; and third layer comprising a blend of at least two polyethylene film, wherein the first and second aluminium layer independently have a thickness in the range of 9-20 microns.

In another implementation, the colorant master batch is calcium carbonate (CaCO₃), titanium dioxide (TiO₂), and combinations thereof.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the colorant master batch is calcium carbonate, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers; second layer comprising at least one polyethylene polymer; and third layer comprising a blend of at least two polyethylene film, wherein the first and second aluminium layer independently have a thickness in the range of 9-20 microns.

In one implementation, the colorant master batch has calcium carbonate (CaCO₃) loading in the range of 40% to 65% with a particle size in the range of 1 micro meters to 20 micro meters.

In one implementation, the present disclosure relates to the multilayer film laminate comprising a printable film layer comprises first layer comprising a blend of at least two polyethylene polymers and a colorant master batch having a weight percentage in the range of 0-10% of said blend; second layer comprising at least one polyethylene polymer and a colorant master batch having a weight percentage in the range of 0-10% of said polyethylene polymer; and third layer comprising a blend of at least two polyethylene film and a colorant master batch having a weight percentage in the range of 0-10% of said blend, wherein the colorant master batch have calcium carbonate (CaCO₃) loading in the range of 40% to 65% with a particle size in the range of 1 micro meters to 20 micro meters, a first aluminium layer between first co-extruded bond layer and second mono-extruded bond layer, wherein the first co-extruded bond layer is between the printable film layer and the first aluminium layer; a second aluminium layer between second mono-extruded and third co-extruded bond layers; and a sealant layer adjacent to the third co-extruded layer comprises first layer comprising a blend of at least two polyethylene polymers; second layer comprising at least one polyethylene polymer; and third layer comprising a blend of at least two polyethylene film, wherein the first and second aluminium layer independently have a thickness in the range of 9-20 microns.

In another implementation, the present disclosure relates to the multilayer film laminate comprising a first co-extruded bond layer comprises a primary layer selected from the group consisting of ethylene acrylic acid (EAA) and ethylene methacrylic acid (EMAA) and a secondary layer consisting of linear low density polyethylene (LLDPE), wherein the primary layer is adjacent to the aluminium layer and the secondary layer is in contact with the printable film layer.

In another implementation, the present disclosure relates to the multilayer film laminate comprising a the second mono-extruded bond layer selected from the group consisting of ethylene acrylic acid (EAA) and ethylene methacrylic acid (EMAA) which is adjacent to the first aluminium layer and the second aluminium layer.

In another implementation, the present disclosure relates to the multilayer film laminate comprising a third co-extruded bond layer comprises a primary layer selected from the group consisting of ethylene acrylic acid (EAA) and ethylene methacrylic acid (EMAA) and a secondary layer consisting of linear low density polyethylene (LLDPE), wherein the primary layer is adjacent to the aluminium layer and the secondary layer is in contact with the sealant layer.

In one implementation, the aluminium layer comprises soft annealed aluminium foil made up of an alloy of iron in a weight percentage in the range of 0.6% to 1.0% of said foil and silicon in a weight percentage in the range of 0.5% to 0.9% of said foil.

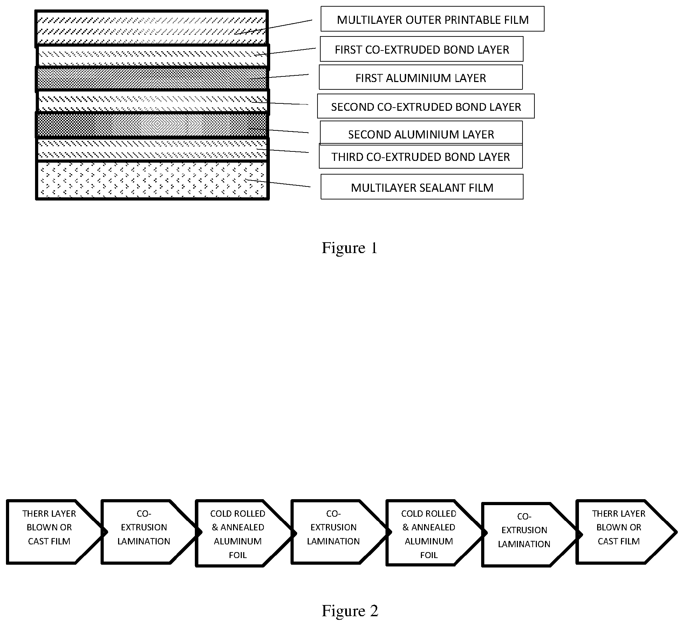

In one implementation, **Figure 1** illustrates an exemplary structure of a laminate with high collapsibility and less resilience property comprising: a printable film layer having thickness in the range of 60-80 microns; a first co-extruded bond layer having thickness in the range of 20-40 microns; a first aluminium layer having thickness in the range of 9-20 microns; a second mono-extruded bond layer having thickness in the range of 20-40 microns; a second aluminium layer having thickness in the range of 9-20 microns; a third co-extruded bond layers having thickness in the range of 20-40 microns; and a sealant layer having thickness in the range of 60-80 microns.

In one implementation, the present disclosure relates to the multilayer film laminate comprising: (a) a printable film layer having thickness in the range of 60-80 microns, comprising a blend of medium density polyethylene with a density in the range of 0.925 g/cc to 0.94 g/cc, linear low density polyethylene with a density in the range of 0.925 g/cc to 0.96 g/cc and a colourant master batch; (b) a first co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; (c) a first aluminium layer having thickness in the range of 9-20 microns; (d) a second mono-extruded bond layer having thickness in the range of 20-40 microns, and is selected from the group consisting of ethylene acrylic acid (EAA), ethylene methacrylic acid (EMAA) with acrylic acid co-monomer weight percentage range 6.0 to 12.0 with a melt flow index in the range of 7.0 g/10 min to 15.0 g/10 min; (e) a second aluminium layer having thickness in the range of 9-20 microns; (f) a third co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; and (g) a sealant layer having thickness in the range of 60-80 microns, comprising a blend of medium density polyethylene with a density in the range of 0.925 g/cc to 0.94 g/cc, and linear low density polyethylene with a density in the range of 0.925 g/cc to 0.96 g/cc having thickness in the range of 60-80 microns.

In one implementation, the present disclosure relates to the multilayer film laminate comprising: a printable film layer having thickness in the range of 60-80 microns, comprising a blend of medium density polyethylene with density in the range of 0.925 g/cc to 0.94 g/cc, linear low density polyethylene with a density in the range of 0.925 g/cc to 0.96 g/cc, and colorant master batch; a first co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min having thickness in the range of 20-40 microns; a first aluminium layer having thickness in the range of 9-20 microns; a second mono-extruded bond layer having thickness in the range of 20-40 microns, and is selected from the group consisting of ethylene acrylic acid (EAA), ethylene methacrylic acid (EMAA) with acrylic acid co-monomer weight percentage range 6.0 to 12.0 and a melt flow index in the range of 7.0 g/10 min to 15.0 g/10 min; a second aluminium layer having thickness in the range of 9-20 microns; a third co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; and a sealant layer having thickness in the range of 60-80 microns, comprising a blend of medium density polyethylene with a density in the range of 0.925 g/cc to 0.94 g/cc, linear low density polyethylene with a density in the range of 0.925 g/cc to 0.96 g/cc, and colorant master batch.

In one implementation, the present disclosure relates to the multilayer film laminate comprising: a printable film layer having thickness in the range of 60-80 microns, comprising a blend of medium density polyethylene with density in the range of 0.925 g/cc to 0.94 g/cc, linear low density polyethylene with a density in the range of 0.925 g/cc to 0.96 g/cc, and colorant master batch; a first co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; a first aluminium layer having thickness in the range of 9-20 microns; a second mono-extruded bond layer having thickness in the range of 20-40 microns, and is selected from the group consisting of ethylene acrylic acid (EAA), ethylene methacrylic acid (EMAA) with acrylic acid co-monomer weight percentage range 6.0 to 12.0 and a melt flow index in the range of 7.0 g/10 min to 15.0 g/10 min; a second aluminium layer having thickness in the range of 9-20 microns; a third co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; and a sealant layer having thickness in the range of 60-80 microns, comprising a blend of medium density polyethylene with a density in the range of 0.925 g/cc to 0.94 g/cc, linear low density polyethylene with a density in the range of 0.925 g/cc to 0.96 g/cc, and colorant master batch, wherein the EAA or EMAA having co-monomer weight percentage in the range 6 to 12%.

In another implementation, the EAA or EMAA weight percentage is 9% of the laminate.

In one implementation, the present disclosure relates to the multilayer film laminate comprising: (a) a printable film layer having thickness in the range of 60-80 microns, comprising a blend of medium density polyethylene with a density in the range of 0.925 g/cc to 0.94 g/cc, and linear low density polyethylene with a density in the range of 0.925 g/cc to 0.96 g/cc; (b) a first co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; (c) a first aluminium layer having thickness in the range of 9-20 microns; (d) a second mono-extruded bond layer having thickness in the range of 20-40 microns, and is selected from the group consisting of ethylene acrylic acid (EAA), ethylene methacrylic acid (EMAA) with acrylic acid co-monomer weight percentage range 6.0 to 12.0, with a melt flow index in the range of 7.0 g/10 min to 15.0 g/10 min; (e) a second aluminium layer having thickness in the range of 9-20 microns; (f) a third co-extruded bond layer having thickness in the range of 20-40 microns, comprising a primary layer selected from the group consisting of ethylene acrylic acid (EAA) and ethylene methacrylic acid (EMAA) and a secondary layer consisting of linear low density polyethylene (LLDPE) with high melt flow index in the range of 7.0 g/10 min to 20.0 g/10 min; and (g) a sealant layer having thickness in the range of 60-80 microns, comprising a blend of medium density polyethylene with a density in the range of 0.925 g/cc to 0.94 g/cc, and linear low density polyethylene with a density in the range of 0.925 g/cc to 0.96 g/cc.

In one implementation, the present disclosure relates to the multilayer film laminate comprising: (a) a printable film layer having thickness of 75 microns, comprising a blend of medium density polyethylene with a density in of 0.93 g/cc, linear low density polyethylene with a density of 0.935 g/cc and a colorant master batch; (b) a first co-extruded bond layer having thickness of 30 microns, comprising a primary layer selected from the group consisting of ethylene acrylic acid (EAA) and ethylene methacrylic acid (EMAA) and a secondary layer consisting :of linear low density polyethylene (LLDPE) with high melt flow index of 15.0 g/10 min; (c) a first aluminium layer having thickness of 12microns; (d) a second mono-extruded bond layer having thickness of 30 microns, and is selected from the group consisting of ethylene acrylic acid (EAA), ethylene methacrylic acid (EMAA) and acrylic acid co-monomer with a melt flow index of 10.0 g/10 min;(e) a second aluminium layer having thickness of 12 microns; (f) a third co-extruded bond layer having thickness of 30 microns, comprising a primary layer selected from the group consisting of ethylene acrylic acid (EAA) and ethylene methacrylic acid (EMAA) and a secondary layer consisting of linear low density polyethylene (LLDPE) with high melt flow index of 15.0 g/10 min; and (g) a sealant layer having thickness of 60-80 microns, comprising a blend of medium density polyethylene with a density of 0.933 g/cc, and linear low density polyethylene with a density of 0.935 g/cc.

In one implementation the present disclosure relate to the multilayer film laminate comprising a printable film layer comprising (a) blend of medium density polyethylene with a density in the range of 0.925 g/cc to 0.94 g/cc, linear low density polyethylene with a density in the range of 0.925 g/cc to 0.96 g/cc and a colourant master batch having thickness in the range of 60-80 microns; (b) a first co-extruded bond layer having thickness in the range of 20-40 microns, comprising a primary layer selected from the group consisting of ethylene acrylic acid (EAA) and Ethylene methacrylic acid (EMAA) and a secondary layer consisting of linear low density polyethylene (LLDPE) with high melt flow index in the range of 7.0 g/10 min to 20.0 g/10 min; (c) a first aluminium layer having thickness in the range of 9-20 microns; (d) a second mono-extruded bond layer having thickness in the range of 20-40 microns, and is selected from the group consisting of ethylene acrylic acid (EAA), Ethylene methacrylic acid (EMAA) and acrylic acid co-monomer with a melt flow index in the range of 7.0 g/10 min to 15.0 g/10 min; (e) a second aluminium layer having thickness in the range of 9-20 microns; (f) a third co-extruded bond layer having thickness in the range of 20-40 microns, comprising a primary layer selected from the group consisting of ethylene acrylic acid (EAA) and methacrylic acid (EMAA) and a secondary layer consisting of linear low density polyethylene (LLDPE) with high melt flow index in the range of 7.0 g/10 min to 20.0 g/10 min; and (g) a sealant layer having thickness in the range of 60-80 microns, comprising a blend of medium density polyethylene with a density in the range of 0.925 g/cc to 0.94 g/cc, and linear low density polyethylene with a density in the range of 0.925 g/cc to 0.96 g/cc.

In one implementation, the present disclosure relates to the multilayer film laminate comprising: (a) a printable film layer having thickness of 75 microns, comprising a blend of high density polyethylene with a density in of 0.933 g/cc, linear low density polyethylene with a density of 0.935 g/cc and a colorant master batch; (b) a first co-extruded bond layer having thickness of 30 microns, comprising a primary layer selected from the group consisting of ethylene acrylic acid (EAA) and ethylene methacrylic acid (EMAA) and a secondary layer consisting of linear low density polyethylene (LLDPE) with high melt flow index of 15.0 g/10 min; (c) a first aluminium layer having thickness of 12microns; (d) a second mono-extruded bond layer having thickness of 30 microns, and is selected from the group consisting of ethylene acrylic acid (EAA), ethylene methacrylic acid (EMAA)with acrylic acid co-monomer weight percentage range 6.0 to 12.0, with a melt flow index of 7.0 to 10.0 g/10 min; (e) a second aluminium layer having thickness of 12microns; (f) a third co-extruded bond layer having thickness of 30 microns, comprising a primary layer selected from the group consisting of ethylene acrylic acid (EAA) and ethylene methacrylic acid (EMAA) and a secondary layer consisting of linear low density polyethylene (LLDPE) with high melt flow index of 15.0 g/10 min; and (g) a sealant layer having thickness of 60-80 microns, comprising a blend of medium density polyethylene with a density of 0.933 g/cc, and linear low density polyethylene with a density of 0.935 g/cc.

In one implementation, the present disclosure relates to the multilayer film laminate comprising: (a) a printable film layer having thickness of 75 microns, comprising a blend of medium density polyethylene with a density in of 0.933 g/cc, linear low density polyethylene with a density of 0.935 g/cc and a colorant master batch; (b) a first co-extruded bond layer having thickness of 30 microns, comprising a primary layer selected from the group consisting of ethylene acrylic acid (EAA) and ethylene methacrylic acid (EMAA) and a secondary layer consisting of linear low density polyethylene (LLDPE) with high melt flow index of 15.0 g/10 min; (c) a first aluminium layer having thickness of 12microns; (d) a second mono-extruded bond layer having thickness of 30 microns, and is selected from the group consisting of ethylene acrylic acid (EAA), Ethylene methacrylic acid (EMAA) and acrylic acid co-monomer with a melt flow index of 10.0 g/10 min; (e) a second aluminium layer having thickness of 12microns; (f) a third co-extruded bond layer having thickness of 30 microns, comprising a primary layer selected from the group consisting of ethylene acrylic acid (EAA) and ethylene methacrylic acid (EMAA) and a secondary layer consisting of linear low density polyethylene (LLDPE) with high melt flow index of 15.0 g/10 min; and (g) a sealant layer having thickness of 60-80 microns, comprising a blend of medium density polyethylene with a density of 0.933 g/cc, and linear low density polyethylene with a density of 0.935 g/cc.

In one implementation, the present disclosure relates to the multilayer film laminate comprising: (a) a printable film layer comprising: (i) first layer comprising a blend of medium density polyethylene with a density in of 0.933 g/cc, linear low density polyethylene with a density of 0.935 g/cc and a colorant master batch having a weight percentage in the range of 0-10% of said blend; (ii) second layer comprising a blend of medium density polyethylene with a density in of 0.933 g/cc and colorant master batch having a weight percentage in the range of 0-10% of said polyethylene polymer; and (iii) third layer comprising a blend of medium density polyethylene with a density in of 0.933 g/cc, linear low density polyethylene with a density of 0.935 g/cc and a colorant master batch having a weight percentage in the range of 0-10% of said blend, wherein the printable film layer thickness is 75microns; (b) a first co-extruded bond layer having thickness of 30 microns, comprising a primary layer selected from the group consisting of ethylene acrylic acid (EAA), and ethylene methacrylic acid (EMAA) and a secondary layer of linear low density polyethylene (LLDPE) with high melt flow index of 15.0 g/10 min; (c) a first aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (d) a second mono-extruded bond layer having thickness of 30 microns, and is selected from the group consisting of ethylene acrylic acid (EAA), and ethylene methacrylic acid (EMAA) with acrylic acid co-monomer weight percentage range 6.0 to 12.0 with a melt flow index of 7.0 to 10.0 g/10 min; (e) a second aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (f) a third co-extruded bond layer having thickness of 30 microns, comprising a primary layer selected from the group consisting of ethylene acrylic acid (EAA), and ethylene methacrylic acid (EMAA) and a secondary layer of linear low density polyethylene (LLDPE) with high melt flow index of 15.0 g/10 min; and (g) a sealant layer comprising: (i) first layer comprising a blend of medium density polyethylene with a density in of 0.933 g/cc, linear low density polyethylene with a density of 0.935 g/cc and a colorant master batch having a weight percentage in the range of 0-10% of said blend; (ii) second layer comprising a blend of medium density polyethylene with a density in of 0.933 g/cc and colorant master batch having a weight percentage in the range of 0-10% of said polyethylene polymer; and (iii) third layer comprising a blend of medium density polyethylene with a density in of 0.933 g/cc, linear low density polyethylene with a density of 0.935 g/cc and a colorant master batch having a weight percentage in the range of 0-10% of said blend, wherein the sealant layer thickness is 70 microns.

In one implementation, the present disclosure relates to the multilayer film laminate comprising: (a) a printable film layer comprising: (i) first layer comprising a blend of medium density polyethylene with a density in of 0.933 g/cc, linear low density polyethylene with a density of 0.935 g/cc and a colorant master batch having a weight percentage in the range of 0-10% of said blend; (ii) second layer comprising a blend of medium density polyethylene with a density in of 0.933 g/cc and colorant master batch having a weight percentage in the range of 0-10% of said polyethylene polymer; and (iii) third layer comprising a blend of medium density polyethylene with a density in of 0.933 g/cc, linear low density polyethylene with a density of 0.935 g/cc and a colorant master batch having a weight percentage in the range of 0-10% of said blend, wherein the printable film layer thickness is 75microns; (b) a first co-extruded bond layer having thickness of 30 microns, comprising a primary layer of ethylene acrylic acid (EAA) and a secondary layer of linear low density polyethylene (LLDPE) with high melt flow index of 15.0 g/10 min; (c) a first aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (d) a second mono-extruded bond layer of ethylene acrylic acid (EAA) with acrylic acid co-monomer weight percentage range 6.0 to 12.0 and with a melt flow index of 7.0 to 10.0 g/10 min having thickness of 30 microns; (e) a second aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (f) a third co-extruded bond layer having thickness of 30 microns, comprising a primary layer s of ethylene acrylic acid (EAA) and a secondary layer of linear low density polyethylene (LLDPE) with high melt flow index of 15.0 g/10 min; and (g) a sealant layer comprising: (i) first layer comprising a blend of medium density polyethylene with a density in of 0.933 g/cc, and linear low density polyethylene with a density of 0.935 g/cc; (ii) second layer comprising a blend of medium density polyethylene with a density in of 0.933 g/cc; and (iii) third layer comprising a blend of medium density polyethylene with a density in of 0.933 g/cc, and linear low density polyethylene with a density of 0.935 g/cc, wherein the sealant layer thickness is 70 microns.

In one implementation, the present disclosure relates to the multilayer film laminate comprising: (a) a printable film layer comprising: (i) first layer comprising a blend of medium density polyethylene with a density in of 0.933 g/cc, linear low density polyethylene with a density of 0.935 g/cc and a colorant master batch having a weight percentage in the range of 0-10% of said blend; (ii) second layer comprising a blend of medium density polyethylene with a density in of 0.933 g/cc and colorant master batch having a weight percentage in the range of 0-10% of said polyethylene polymer; and (iii) third layer comprising a blend of medium density polyethylene with a density in of 0.933 g/cc, linear low density polyethylene with a density of 0.935 g/cc and a colorant master batch having a weight percentage in the range of 0-10% of said blend, wherein the printable film layer thickness is 75microns; (b) a first co-extruded bond layer having thickness of 30 microns, comprising a primary layer of ethylene methacrylic acid (EMAA) and a secondary layer of linear low density polyethylene (LLDPE) with high melt flow index of 15.0 g/10 min; (c) a first aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (d) a second mono-extruded bond layer of ethylene methacrylic acid (EMAA) with acrylic acid co-monomer weight percentage range 6.0 to 12.0 and with a melt flow index of 7.0 to 10.0 g/10 min having thickness of 30 microns; (e) a second aluminium layer having thickness of 12 microns, comprises soft annealed aluminium foil made up of an alloy of iron in a weight percentage in the range of 0.6% to 1.0% of said foil and silicon in a weight percentage in the range of 0.5% to 0.9% of said foil; (f) a third co-extruded bond layer having thickness of 30 microns, comprising a primary layer of ethylene methacrylic acid (EMAA) and a secondary layer of linear low density polyethylene (LLDPE) with high melt flow index of 15.0 g/10 min; and (g) a sealant layer comprising: (i) first layer comprising a blend of medium density polyethylene with a density in of 0.933 g/cc, and linear low density polyethylene with a density of 0.935 g/cc; (ii) second layer comprising a blend of medium density polyethylene with a density in of 0.933 g/cc; and (iii) third layer comprising a blend of medium density polyethylene with a density in of 0.933 g/cc, and linear low density polyethylene with a density of 0.935 g/cc, wherein the sealant layer thickness is 70 microns.

In one implementation, the present disclosure relates to the laminate of the present invention for vignette and tonal image printing wherein the laminate thickness is in the range of 235 to 470 microns. In another implementation, the laminate thickness is 210 microns. In another implementation, the laminate thickness is 257 microns.

In one implementation, the present disclosure relates to a process for preparation of the laminate of the present invention for vignette and tonal image printing, said process comprising the steps of: (a) obtaining a printable film layer and a sealant layer; (b) contacting the printable film layer with a first co-extruded bond layer comprising a blend of EAA and low density polyethylene (LDPE), and a first aluminium layer, to obtain a composite semi-laminate; (c) contacting the composite semi-laminate with a second co-extruded bond layer consisting of EAA and second aluminium layer to obtain a semi-laminated substrate; (d) contacting the semi-laminated substrate with a third co-extruded bond layer comprising EAA and low density polyethylene and a sealant layer to obtain a premade multilayer film laminate; and (e) cooling and compressing the a premade multilayer film laminate to obtain the multilayer film laminate.

In one implementation, the present disclosure relates to a process of manufacturing the tube container from the said laminate. **Figure 2** illustrates an exemplary process comprises the steps of: polymers such as MDPE, HDPE and LLDPE with appropriate MFI (melt flow index), Density and ratio are run through 3 layers blown or cast film making process. Layer ratio of the three layers film range between 1:1:1 to 1:4:1. Both outer print film and sealant film have been made in this process. Thicknesses of these films are kept between 50 and 100 microns, premade multilayer outer film is mounted on the main un-winder of the laminating machine. Through various idle rollers, film reaches to the first lamination head and to NIP junction (combination of chill roll and rubberized nip roll), first co-extrusion hot polymer melt act as bond or TIE between outer film and the first aluminium foil layer, with the rubberized nip pressure of 20 to 40 pound per linear inch, co-extruded hot polymer melt spread uniformly and help uniform bond strength between outer film and foil. By exchanging heat with the chill roll, three layer laminate gets cool down to ambient temperature, first and third co-extrusion lamination is the TIE or bond layer between outer film and first Foil layer. Polymer composition for TIE layer is LLDPE, EAA(ethylene acrylic acid) and EMA(ethylene-methacrylic acid) where in LLDPE layer facing towards outer film and EAA or EMAA always facing towards aluminium foil. layer ratio of LLDPE and EAA or EMAA is 1:1 to 1:2, co-extrusion process employs extruder with L/D ratio 24:1 to 32:1 L/D ratio barrier screw, Feed Block and Flat DIE. Feed Block has two ports and channels, one for LDPE Extruder and the other for EAA or EMAA, co-extruded hot polymer melt act as bond between outer film (multilayer thermoplastic film) and aluminium foil, melt temperature of the co-extruded polymer is maintained at 315 °C, aluminium foil is a standard cold or hot rolled soft annealed with alloy 8011, however, any alloy that has 98% aluminium purity will serve the laminate requirement, surface tension of the annealed foil is kept between 70 to 72 dyne/cm. Foil reels are fed from the first sandwich unwinder and run through a chill roll and rubberised nip roll, second co-extrusion lamination is the TIE layer between first Foil and second foil layer, polymer composition for this TIE layer is EAA (ethylene acrylic acid) and or EMA (ethylene-methacrylic acid). EAA or EMAA could have acid % (weight by weight ratio) between 6% and 12% MFI 7.0 to 10 g/10 min. melt temperature of the co-extruded polymer is maintained at 315 °C, premade multilayer sealant film is mounted on the second sandwich un-winder of the laminating machine, film is fed to the second lamination head and to nip junction (combination of Chill roll and rubberized nip roll). third co-extrusion hot polymer melt bonds the previously sub laminate layers and the sealant layer. With the nip pressure, all the sub assembled layers, co-extruded hot polymer melt and sealant films get bonded, by exchanging heat with the chill roll, composite multilayer film laminate gets cool down to ambient temperature, composite multilayer film laminate article thus made is cured at ambient temperature for 72 hours before secondary operation such as slitting, printing and tubing.

### Examples

The disclosure will now be illustrated with working examples, which is intended to illustrate the working of disclosure. Other examples are also possible which are within the scope of the present disclosure.

### Example 1

### Process for preparing a laminate

The process for preparing a laminate in accordance to the present disclosure is depicted in Figure 2.

### Example 2:

### Tube (sleeve) stiffness measurement: ASTM D2412-02

Multilayer film laminate with variable polymer and foil thickness formed in to tube or cylinder shape with constant 1 (one) inch diameter and 6 (six) inch length.

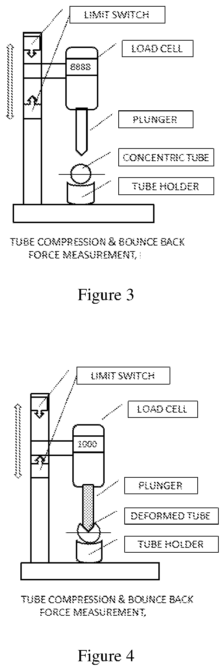

Each variants of the tube have been mounted on the Tube holder one by one and measured the compressing force in lb. with the help of 51b Load cell. Speed of the load cell mounting cross head have been kept in accordance to ASTM D2412-021 inch diameter tube was compressed only 30% of its concentric diameter i.e. 0.29 inch. Electronic Limit switch is used to precise control of the cross head downward movement and location of the crosshead on the side mounted measuring scale. The pictorial representation for tube compression and bounce back force measurement are depicted in Figure 3 and Figure 4. Ten (10) tubes from each category are measured and average stiffness value determined as disclosed in Table 1 below:

**Table 1:**

| **Test Standard: ASTM D2412-02(2008)** | | | | | | | | | |
|---|---|---|---|---|---|---|---|---|---|
| **Basic laminate structure taken for Testing** | **Sample no** | **F Compressive Force (lbf)** | **30% deflection of structure (inch)** | **F Compressive Force (lbf/in)** | **Δγ (computed after 30% delfection) (mm)** | **Δγ (computed after 30% delfection) (inch)** | **Sleeve Stiffnes (lbf/in/in)** | **Sleeve Stiffnes (kPa)** | **Sleeve Stiffnes (bar)** |
| **100 mic PE blend of HDPE+ LLDPE// 30 mic EAA// 20 mic Foil// 40 mic EAA// 100 mic PE blend of HDPE+ LLDPE. TOTAL THICKNES S= 290 micron** | 1 | 1.5 | 0.29 | 5.0 | 17.5 | 0.68 | 7.29 | 50 | 0.50 |
| | 2 | 1.5 | 0.29 | 5.1 | 17.5 | 0.68 | 7.51 | 52 | 0.52 |
| | 3 | 1.6 | 0.29 | 5.6 | 17.5 | 0.68 | 8.17 | 56 | 0.56 |
| | 4 | 1.4 | 0.29 | 4.7 | 17.5 | 0.68 | 6.85 | 47 | 0.47 |
| | 5 | 1.4 | 0.29 | 4.7 | 17.5 | 0.68 | 6.96 | 48 | 0.48 |
| | 6 | 1.7 | 0.29 | 5.7 | 17.5 | 0.68 | 8.28 | 57 | 0.57 |
| | 7 | 1.4 | 0.29 | 4.7 | 17.5 | 0.68 | 6.96 | 48 | 0.48 |
| | 8 | 1.5 | 0.29 | 5.0 | 17.5 | 0.68 | 7.40 | 51 | 0.51 |
| | 9 | 1.5 | 0.29 | 5.2 | 17.5 | 0.68 | 7.62 | 53 | 0.53 |
| | 10 | 1.5 | 0.29 | 5.1 | 17.5 | 0.68 | 7.51 | 52 | 0.52 |
| | **Average** | | | | | **Average** | **7.45** | **51** | **0.51** |
| **120 mic PE blend of HDPE+ LLDPE// 35 mic EAA// 12 mic Foil// 35 mic EAA// 50 mic PE blend of HDPE+ LLDPE. TOTAL THICKNES S= 252 micron** | 1 | 1.2 | 0.29 | 4.1 | 17.5 | 0.68 | 6.07 | 42 | 0.42 |
| | 2 | 1.3 | 0.29 | 4.4 | 17.5 | 0.68 | 6.41 | 44 | 0.44 |
| | 3 | 1.2 | 0.29 | 4.1 | 17.5 | 0.68 | 607 | 42 | 0.42 |
| | 4 | 1.1 | 0.29 | 3.8 | 17.5 | 0.68 | 5.63 | 39 | 0.39 |
| | 5 | 1.1 | 0.29 | 3.8 | 17.5 | 0.68 | 5.52 | 38 | 0.38 |
| | 6 | 10 | 0.29 | 3.5 | 17.5 | 0.68 | 5.14 | 35 | 0.35 |
| | 7 | 1.0 | 0.29 | 3.6 | 17.5 | 0.68 | 5.25 | 36 | 0.36 |
| | 8 | 1.0 | 0.29 | 3.5 | 17.5 | 0.68 | 5.14 | 35 | 0.35 |
| | 9 | 0.9 | 0.29 | 3.2 | 17.5 | 0.68 | 4.75 | 33 | 0.33 |
| | 10 | 1.1 | 0.29 | 3.6 | 17.5 | 0.68 | 5.30 | 37 | 0.37 |
| | **Average** | | | | | **Average** | **5.53** | **38.11** | **0.38** |
| **75 mic PE blend of HDPE+ LLDPE// 30 mic EAA// 12 mic Foil // 25 mic EAA//12 mic Foil //30 mic EAA//70 mic PE blend of HDPE+ LLDPE. TOTAL THICKNES S= 254 micron** | 1 | 1.2 | 0.29 | 4.0 | 17.5 | 0.68 | 5.85 | 40 | 0.40 |
| | 2 | 1.2 | 0.29 | 3.9 | 17.5 | 0.68 | 5.78 | 40 | 0.40 |
| | 3 | 1.2 | 0.29 | 4.1 | 17.5 | 0.68 | 5.96 | 41 | 0.41 |
| | 4 | 1.2 | 0.29 | 4.1 | 17.5 | 0.68 | 607 | 42 | 0.42 |
| | 5 | 1.4 | 0.29 | 4.9 | 17.5 | 0.68 | 7.18 | 49 | 0.49 |
| | 6 | 1.3 | 0.29 | 4.4 | 17.5 | 0.68 | 6.52 | 45 | 0.45 |
| | 7 | 1.6 | 0.29 | 5.4 | 17.5 | 0.68 | 7.84 | 54 | 0.54 |
| | 8 | 1.5 | 0.29 | 5.3 | 17.5 | 0.68 | 7.73 | 53 | 0.53 |
| | 9 | 1.3 | 0.29 | 4.5 | 17.5 | 0.68 | 6.63 | 46 | 0.46 |
| | 10 | 1.3 | 0.29 | 4.6 | 17.5 | 0.68 | 6.74 | 46 | 0.46 |
| | **Average** | | | | | **Average** | **6.63** | **45.71** | **0.46** |
| **75 mic PE blend of HDPE+ LLDPE// 30 mic EAA// 20 mic Foil // 25 mic EAA//20 mic Foil //30 mic EAA//70 mic PE blend of HDPE+ LLDPE. TOTAL THICKNES S= 270 micron** | 1 | 2.3 | 0.29 | 7.9 | 17.5 | 0.68 | 11.60 | 80 | 0.80 |
| | 2 | 2.2 | 0.29 | 7.7 | 17.5 | 0.68 | 11.26 | 78 | 0.78 |
| | 3 | 2.2 | 0.29 | 7.6 | 17.5 | 0.68 | 11.15 | 77 | 0.77 |
| | 4 | 2.2 | 0.29 | 7.5 | 17.5 | 0.68 | 10.93 | 75 | 0.75 |
| | 5 | 2.2 | 0.29 | 7.5 | 17.5 | 0.68 | 11.04 | 76 | 0.76 |
| | 6 | 2.2 | 0.29 | 7.4 | 17.5 | 0.68 | 10.82 | 75 | 0.75 |
| | 7 | 2.2 | 0.29 | 7.7 | 17.5 | 0.68 | 11.26 | 78 | 0.78 |
| | 8 | 2.3 | 0.29 | 7.8 | 17.5 | 0.68 | 11.37 | 78 | 0.78 |
| | 9 | 2.2 | 0.29 | 7.5 | 17.5 | 0.68 | 11.04 | 76 | 0.76 |
| | 10 | 2.1 | 0.29 | 7.2 | 17.5 | 0.68 | 10.60 | 73 | 0.73 |
| | **Average** | | | | | **Average** | **11.11** | **76.60** | **0.77** |
| **75 mic PE blend of HDPE+ LLDPE// 30 mic EAA// 9 mic Foil// 25 mic EAA//9 mic Foil //30 mic EAA//70 mic PE blend of HDPE+ LLDPE. TOTAL THICKNES S= 248 micron** | 1 | 1.2 | 0.29 | 4.2 | 17.5 | 0.68 | 6.18 | 43 | 0.43 |
| | 2 | 10 | 0.29 | 3.5 | 17.5 | 0.68 | 5.08 | 35 | 0.35 |
| | 3 | 1.2 | 0.29 | 4.1 | 17.5 | 0.68 | 5.96 | 41 | 0.41 |
| | 4 | 1.1 | 0.29 | 3.8 | 17.5 | 0.68 | 5.63 | 39 | 0.39 |
| | 5 | 1.1 | 0.29 | 3.9 | 17.5 | 0.68 | 5.69 | 39 | 0.39 |
| | 6 | 1.2 | 0.29 | 4.1 | 17.5 | 0.68 | 5.96 | 41 | 0.41 |
| | 7 | 1.1 | 0.29 | 3.8 | 17.5 | 0.68 | 5.52 | 38 | 0.38 |
| | 8 | 1.1 | 0.29 | 3.7 | 17.5 | 0.68 | 5.41 | 37 | 0.37 |
| | 9 | 1.1 | 0.29 | 3.8 | 17.5 | 0.68 | 5.63 | 39 | 0.39 |
| | 10 | 1.1 | 0.29 | 3.6 | 17.5 | 0.68 | 5.30 | 37 | 0.37 |
| | **Average** | | | | | **Average** | **5.64** | **38.87** | **0.39** |

### Observations:

From Table 1 it is established that, given the similar polymer composition and blend, two 9 microns aluminium foil based multilayer film laminated tubes with 248 microns total laminate thickness exhibits almost equal sleeve stiffness to that of 252 microns multilayer film laminated tubes with single 12 microns aluminium foil. Tube with two layers of 9 microns foil has exhibited the least resilience as compared to that of single 12 microns foil. Moreover, single 12 microns foil based multilayer has shown delaminated foil to EAA interphase due to the migration of active ingredients from the aggressive product formulation. Product itself for oxidized in single 12microns foil based tube after 8 weeks of product stability at 43 °C accelerated conditions.

Other tubes with two 12 microns and two 20 microns aluminium foil base multilayer structure also exhibits comparatively higher sleeve stiffness, lower tube resilience, excellent laminate integrity and product stability but at higher resource cost. Single 20 microns foil based multilayer film laminated tubes exhibits higher sleeve stiffness and resilience as compared to two 9 microns foil based multilayer film laminated tube, tube integrity and product stability in this single 20 microns foil based tube was found good though.

Hence, the optimized design of two 9 microns foil enhances economic value compared to single 20 microns foil and help in achieving greater sustainability in terms of tube design with lesser laminate thickness yet higher sleeve stiffness and collapsibility.

### Advantages gained in the example illustrative process in this subject matter:

Although the subject matter has been described in considerable detail with reference to certain examples and implementations thereof, other implementations are possible.

The multilayer film laminate as described herein provides an article for packaging material containing reactive ingredients. The laminate as described in the present disclosure have high stiffness, collapsibility and less resilience property which enhances the quality and shelf life of the product inside the article.

## Claims

1. A multilayer film laminate comprising:
a. a printable film layer;
b. a first aluminium layer between first co-extruded bond layer and second mono-extruded bond layer, wherein the first co-extruded bond layer is between the printable film layer and the first aluminium layer;
c. a second aluminium layer between second mono-extruded and third co-extruded bond layers; and
d. a sealant layer adjacent to the third co-extruded layer,
wherein the first and second aluminium layer independently have a thickness in the range of 9-20 microns.

2. The multilayer film laminate as claimed in claim 1, wherein the printable film layer is a multilayer film, preferably comprises 3-7 layers.

3. The multilayer film laminate as claimed in claim 1, wherein the printable film layer comprises:
a. first layer comprising a blend of at least two polyethylene polymers and a colorant master batch having a weight percentage in the range of 0-10% of said blend;
b. second layer comprising at least one polyethylene polymer and a colorant master batch having a weight percentage in the range of 0-10% of said polyethylene polymer; and
c. third layer comprising a blend of at least two polyethylene film and a colorant master batch having a weight percentage in the range of 0-10% of said blend.

4. The multilayer film laminate as claimed in claim 3, wherein the first layer and the third layer of the printable film layer is:
- a blend of medium density polyethylene (MDPE), linear low density polyethylene (LLDPE), and a colorant master batch with a blend ratio in the range of 70:20: 10 to 20:70:10; or
- a blend of medium density polyethylene (MDPE), and linear low density polyethylene (LLDPE) with a blend ratio in the range of 70:30 to 30:70; or
- a blend of high density polyethylene (HDPE), and linear low density polyethylene (LLDPE) with a blend ratio of 50:50.

5. The multilayer film laminate as claimed in claim 3, wherein the second layer of the printable film layer is:
- a blend of medium density polyethylene (MDPE), and linear low density polyethylene (LLDPE) with a blend ratio in the range of 70:30 to 30:70; or
- medium density polyethylene (MDPE).

6. The multilayer film laminate as claimed in claim 1, wherein the sealant layer is a multilayer film, preferably comprises 3-7 layers.

7. The multilayer film laminate as claimed in claim 1, wherein the sealant layer comprises of:
a. first layer comprising a blend of at least two polyethylene polymers;
b. second layer comprising at least one polyethylene polymer; and
c. third layer comprising a blend of at least two polyethylene film.

8. The multilayer film laminate as claimed in claim 7, wherein the first layer and the third layer of the sealant layer is:
- a blend of medium density polyethylene (MDPE), linear low density polyethylene (LLDPE), and a colorant master batch with a blend ratio in the range of 70:20: 10 to 20:70:10; or
- a blend of medium density polyethylene (MDPE), and linear low density polyethylene (LLDPE) with a blend ratio in the range of 70:30 to 30:70; or
- a blend of high density polyethylene (HDPE), and linear low density polyethylene (LLDPE) with a blend ratio of 50:50.

9. The multilayer film laminate as claimed in claim 7, wherein the second layer of the sealant layer is:
- a blend of medium density polyethylene (MDPE), and linear low density polyethylene (LLDPE) with a blend ratio in the range of 70:30 to 30:70; or
- medium density polyethylene (MDPE).

10. The multilayer film laminate as claimed in any of the claims 1, 3, 4, and 8, wherein the colorant master batch is selected from the group consisting of titanium dioxide (TiO₂), zinc disulfide (ZnS₂), zinc oxide (ZnO), barium sulfate (BaSO₄) and calcium carbonate (CaCO₃), preferably
the colorant master batch is titanium dioxide (TiO₂) or calcium carbonate (CaCO₃), preferably the colorant master batch have titanium dioxide (TiO₂) loading in the range of 50% to 75% or have calcium Carbonate (caCO₃) loading in the range of 40% to 65% with a particle size in the range of 1 micro meters to 20 micro meters.

11. The multilayer film laminate as claimed in claim 1, wherein the first co-extruded bond layer comprises a primary layer selected from the group consisting of ethylene acrylic acid (EAA) and ethylene methacrylic acid (EMAA) and a secondary layer consisting of linear low density polyethylene (LLDPE), wherein the primary layer is adjacent to the first aluminium layer and the secondary layer is in contact with the printable film layer.

12. The multilayer film laminate as claimed in claim 1, wherein the second mono-extruded bond layer consists EAA or EMAA which is adjacent to the first aluminium layer and the second aluminium layer.

13. The multilayer film laminate as claimed in claim 1, wherein the third co-extruded bond layer comprises of a primary layer selected from the group consisting of ethylene acrylic acid (EAA) and Ethylene methacrylic acid (EMAA) and a secondary layer consisting of linear low density polyethylene (LLDPE), wherein the primary layer is adjacent to the aluminium layer and the secondary layer is in contact with the sealant layer.

14. The multilayer film laminate as claimed in claim 1, wherein the first aluminium layer or the second aluminium layer comprises soft annealed aluminium foil made up of an alloy of iron in a weight percentage in the range of 0.6% to 1.0% of said foil and silicon in a weight percentage in the range of 0.5% to 0.9% of said foil.

15. A multilayer film laminate as claimed in claim 1, said multilayer film laminate comprising:
a. a printable film layer having thickness in the range of 60-80 microns;
b. a first co-extruded bond layer having thickness in the range of 20-40 microns;
c. a first aluminium layer having thickness in the range of 9-20 microns;
d. a second mono-extruded bond layer having thickness in the range of 20-40 microns;
e. a second aluminium layer having thickness in the range of 9-20 microns;
f. a third co-extruded bond layers having thickness in the range of 20-40 microns; and
g. a sealant layer having thickness in the range of 60-80 microns.

16. A process of manufacturing the multilayer film laminate as claimed in claim 1, said process comprising the steps of:
a. obtaining a printable film layer and a sealant layer;
b. contacting the printable film layer with a first co-extruded bond layer comprising a blend of EAA and low density polyethylene (LDPE), and a first aluminium layer, to obtain a composite semi-laminate;
c. contacting the composite semi-laminate with a second co-extruded bond layer consisting of EAA and second aluminium layer to obtain a semi-laminated substrate;
d. contacting the semi-laminated substrate with a third co-extruded bond layer comprising EAA and low density polyethylene and a sealant layer to obtain a premade multilayer film laminate; and
e. cooling and compressing the premade multilayer film laminate to obtain the multilayer film laminate.

## Patentansprüche

1. Mehrschichtiges Filmlaminat, umfassend:
a. eine bedruckbare Filmschicht;
b. eine erste Aluminiumschicht zwischen der ersten koextrudierten Bindeschicht und der zweiten monoextrudierten Bindeschicht, wobei die erste koextrudierte Bindeschicht zwischen der bedruckbaren Filmschicht und der ersten Aluminiumschicht ist;
c. eine zweite Aluminiumschicht zwischen der zweiten monoextrudierten und der dritten koextrudierten Bindeschicht; und
d. eine Versiegelungsschicht angrenzend an die dritte koextrudierte Schicht,
wobei die erste und die zweite Aluminiumschicht unabhängig eine Stärke in dem Bereich von 9-20 Mikrometern aufweisen.

2. Mehrschichtiges Filmlaminat nach Anspruch 1, wobei die bedruckbare Filmschicht ein mehrschichtiger Film ist, der vorzugsweise 3-7 Schichten umfasst.

3. Mehrschichtiges Filmlaminat nach Anspruch 1, wobei die bedruckbare Filmschicht Folgendes umfasst:
a. eine erste Schicht, umfassend ein Gemisch aus mindestens zwei Polyethylenpolymeren und einem Farbstoff-Masterbatch mit einem Gewichtsprozentsatz in dem Bereich von 0-10 % des Gemischs;
b. eine zweite Schicht, umfassend mindestens ein Polyethylenpolymer und ein Farbstoff-Masterbatch mit einem Gewichtsprozentsatz in dem Bereich von 0-10 % des Polyethylenpolymers; und
c. eine dritte Schicht, umfassend ein Gemisch aus mindestens zwei Polyethylenfilmen und einem Farbstoff-Masterbatch mit einem Gewichtsprozentsatz in dem Bereich von 0-10 % des Gemischs.

4. Mehrschichtiges Filmlaminat nach Anspruch 3, wobei die erste Schicht und die dritte Schicht der bedruckbaren Filmschicht wie folgt ist:
- ein Gemisch aus Polyethylen mittlerer Dichte (MDPE), linearem Polyethylen niedriger Dichte (LLDPE) und einem Farbstoff-Masterbatch mit einem Mischungsverhältnis in dem Bereich von 70:20:10 bis 20:70:10; oder
- ein Gemisch aus Polyethylen mittlerer Dichte (MDPE) und linearem Polyethylen niedriger Dichte (LLDPE) mit einem Mischungsverhältnis im Bereich von 70:30 bis 30:70; oder
- ein Gemisch aus Polyethylen hoher Dichte (HDPE) und linearem Polyethylen niedriger Dichte (LLDPE) mit einem Mischungsverhältnis von 50:50.

5. Mehrschichtiges Filmlaminat nach Anspruch 3, wobei die zweite Schicht der bedruckbaren Filmschicht wie folgt ist:
- ein Gemisch aus Polyethylen mittlerer Dichte (MDPE) und linearem Polyethylen niedriger Dichte (LLDPE) mit einem Mischungsverhältnis im Bereich von 70:30 bis 30:70; oder
- Polyethylen mittlerer Dichte (MDPE).

6. Mehrschichtiges Filmlaminat nach Anspruch 1, wobei die Versiegelungsschicht ein mehrschichtiger Film ist, der vorzugsweise 3-7 Schichten umfasst.

7. Mehrschichtiges Filmlaminat nach Anspruch 1, wobei die Versiegelungsschicht aus Folgendem besteht:
a. einer ersten Schicht, umfassend ein Gemisch aus mindestens zwei Polyethylenpolymeren;
b. einer zweiten Schicht, umfassend mindestens ein Polyethylenpolymer; und
c. einer dritten Schicht, umfassend ein Gemisch aus mindestens zwei Polyethylenfilmen.

8. Mehrschichtiges Filmlaminat nach Anspruch 7, wobei die erste Schicht und die dritte Schicht der Versiegelungsschicht wie folgt ist:
- ein Gemisch aus Polyethylen mittlerer Dichte (MDPE), linearem Polyethylen niedriger Dichte (LLDPE) und einem Farbstoff-Masterbatch mit einem Mischungsverhältnis in dem Bereich von 70:20:10 bis 20:70:10; oder
- ein Gemisch aus Polyethylen mittlerer Dichte (MDPE) und linearem Polyethylen niedriger Dichte (LLDPE) mit einem Mischungsverhältnis im Bereich von 70:30 bis 30:70; oder
- ein Gemisch aus Polyethylen hoher Dichte (HDPE) und linearem Polyethylen niedriger Dichte (LLDPE) mit einem Mischungsverhältnis von 50:50.

9. Mehrschichtiges Filmlaminat nach Anspruch 7, wobei die zweite Schicht der Versiegelungsschicht wie folgt ist:
- ein Gemisch aus Polyethylen mittlerer Dichte (MDPE) und linearem Polyethylen niedriger Dichte (LLDPE) mit einem Mischungsverhältnis im Bereich von 70:30 bis 30:70; oder
- Polyethylen mittlerer Dichte (MDPE).

10. Mehrschichtiges Filmlaminat nach einem der Ansprüche 1, 3, 4 und 8, wobei das Farbstoff-Masterbatch ausgewählt ist aus der Gruppe, bestehend aus Titandioxid (TiO₂), Zinkdisulfid (ZnS₂), Zinkoxid (ZnO), Bariumsulfat (BaSO₄) und Calciumcarbonat (CaCO₃), vorzugsweise
das Farbstoff-Masterbatch Titandioxid (TiO₂) oder Calciumcarbonat (CaCO₃) ist, vorzugsweise das Farbstoff-Masterbatch einen Anteil von Titandioxid (TiO₂) in dem Bereich von 50 % bis 75 % oder einen Anteil von Calciumcarbonat (CaCO₃) in dem Bereich von 40 % bis 65 % mit einer Teilchengröße in dem Bereich von 1 Mikrometer bis 20 Mikrometer aufweist.

11. Mehrschichtiges Filmlaminat nach Anspruch 1, wobei die erste koextrudierte Bindeschicht eine Primärschicht, ausgewählt aus der Gruppe, bestehend aus Ethylenacrylsäure (EAA) und Ethylenmetacrylsäure (EMAA), und eine Sekundärschicht, bestehend aus linearem Polyethylen niedriger Dichte (LLDPE), umfasst, wobei die Primärschicht angrenzend an die erste Aluminiumschicht ist und die Sekundärschicht in Kontakt mit der bedruckbaren Filmschicht ist.

12. Mehrschichtiges Filmlaminat nach Anspruch 1, wobei die zweite monoextrudierte Bindeschicht aus EAA oder EMAA besteht, die angrenzend an die erste Aluminiumschicht und die zweite Aluminiumschicht ist.

13. Mehrschichtiges Filmlaminat nach Anspruch 1, wobei die erste koextrudierte Bindeschicht eine Primärschicht, ausgewählt aus der Gruppe, bestehend aus Ethylenacrylsäure (EAA) und Ethylenmetacrylsäure (EMAA), und eine Sekundärschicht, bestehend aus linearem Polyethylen niedriger Dichte (LLDPE), umfasst, wobei die Primärschicht angrenzend an die Aluminiumschicht ist und die Sekundärschicht in Kontakt mit der Versiegelungsschicht ist.

14. Mehrschichtiges Filmlaminat nach Anspruch 1, wobei die erste Aluminiumschicht oder die zweite Aluminiumschicht eine weichgeglühte Aluminiumfolie umfasst, die aus einer Legierung aus Eisen in einem Gewichtsprozentanteil in dem Bereich von 0,6 % bis 1,0 % der Folie und Silizium in einem Gewichtsprozentanteil in dem Bereich von 0,5 % bis 0,9 % der Folie besteht.

15. Mehrschichtiges Filmlaminat nach Anspruch 1, das mehrschichtige Filmlaminat umfassend:
a. eine bedruckbare Filmschicht, die eine Stärke in dem Bereich von 60-80 Mikrometern aufweist;
b. eine erste koextrudierte Bindeschicht, die eine Stärke in dem Bereich von 20-40 Mikrometern aufweist;
c. eine erste Aluminiumschicht, die eine Stärke in dem Bereich von 9-20 Mikrometern aufweist;
d. eine zweite monoextrudierte Bindeschicht, die eine Stärke in dem Bereich von 20-40 Mikrometern aufweist;
e. eine zweite Aluminiumschicht, die eine Stärke in dem Bereich von 9-20 Mikrometern aufweist;
f. eine dritte koextrudierte Bindeschicht, die eine Stärke in dem Bereich von 20-40 Mikrometern aufweist; und
g. eine Versiegelungsschicht, die eine Stärke in dem Bereich von 60-80 Mikrometern aufweist.

16. Verfahren zum Herstellen des mehrschichtigen Filmlaminats nach Anspruch 1, das Verfahren umfassend die folgenden Schritte:
a. Erlangen einer bedruckbaren Filmschicht und einer Versiegelungsschicht;
b. Inkontaktbringen der bedruckbaren Filmschicht mit einer ersten koextrudierten Bindeschicht, umfassend ein Gemisch aus EAA und Polyethylen niedriger Dichte (LDPE), und einer ersten Aluminiumschicht, um ein Verbundhalblaminat zu erlangen;
c. Inkontaktbringen des Verbundhalblaminats mit einer zweiten koextrudierten Bindeschicht, bestehend aus EAA und einer zweiten Aluminiumschicht, um ein halblaminiertes Substrat zu erlangen;
d. Inkontaktbringen des halblaminierten Substrats mit einer dritten koextrudierten Bindeschicht, umfassend EAA und Polyethylen niedriger Dichte sowie eine Versiegelungsschicht, um ein vorgefertigtes mehrschichtiges Filmlaminat zu erlangen; und
e. Abkühlen und Pressen des vorgefertigten mehrschichtigen Filmlaminats, um das mehrschichtige Filmlaminat zu erlangen.

## Revendications

1. Film stratifié multicouche comprenant :
a. une couche de film imprimable ;
b. une première couche d'aluminium entre une première couche de liaison coextrudée et une deuxième couche de liaison monoextrudée, la première couche de liaison coextrudée étant située entre la couche de film imprimable et la première couche d'aluminium ;
c. une deuxième couche d'aluminium entre la deuxième couche de liaison monoextrudée et une troisième couche de liaison coextrudée ; et
d. une couche d'étanchéité adjacente à la troisième couche coextrudée,
dans lequel la première et la deuxième couche d'aluminium ont indépendamment une épaisseur dans la plage de 9 à 20 µm.

2. Film stratifié multicouche selon la revendication 1, dans lequel la couche de film imprimable est un film multicouche, de préférence comprend de 3 à 7 couches.

3. Film stratifié multicouche selon la revendication 1, dans lequel la couche de film imprimable comprend :
a. une première couche comprenant un mélange d'au moins deux polymères de polyéthylène et un mélange-mère de colorant ayant un pourcentage en poids dans la plage de 0 à 10 % dudit mélange ;
b. une deuxième couche comprenant au moins un polymère de polyéthylène et un mélange-mère de colorant ayant un pourcentage en poids dans la plage de 0 à 10 % dudit polymère de polyéthylène ; et
c. une troisième couche comprenant un mélange d'au moins deux films de polyéthylène et un mélange-mère de colorant ayant un pourcentage en poids dans la plage de 0 à 10 % dudit mélange.

4. Film stratifié multicouche selon la revendication 3, dans lequel la première et la troisième couche du film imprimable sont constituées de :
- un mélange de polyéthylène moyenne densité (MDPE), de polyéthylène basse densité linéaire (LLDPE) et d'un mélange maître de colorant avec un rapport de mélange dans la plage de 70:20:10 à 20:70:10 ; ou
- un mélange de polyéthylène moyenne densité (MDPE) et de polyéthylène basse densité linéaire (LLDPE) avec un rapport de mélange dans la plage de 70:30 à 30:70 ; ou
- un mélange de polyéthylène haute densité (HDPE) et de polyéthylène basse densité linéaire (LLDPE) avec un rapport de mélange de 50:50.

5. Film stratifié multicouche selon la revendication 3, dans lequel la deuxième couche du film imprimable est :
- un mélange de polyéthylène moyenne densité (MDPE) et de polyéthylène basse densité linéaire (LLDPE) avec un rapport de mélange dans la plage de 70:30 à 30:70 ; ou
- un polyéthylène moyenne densité (MDPE).

6. Film stratifié multicouche selon la revendication 1, dans lequel la couche d'étanchéité est un film multicouche, de préférence comprend 3 à 7 couches.

7. Film stratifié multicouche selon la revendication 1, dans lequel la couche d'étanchéité comprend :
a. une première couche comprenant un mélange d'au moins deux polymères de polyéthylène ;
b. une deuxième couche comprenant au moins un polymère de polyéthylène ; et
c. une troisième couche comprenant un mélange d'au moins deux films de polyéthylène.

8. Film stratifié multicouche selon la revendication 7, dans lequel la première couche et la troisième couche de la couche d'étanchéité sont constituées de :
- un mélange de polyéthylène moyenne densité (MDPE), de polyéthylène basse densité linéaire (LLDPE) et d'un mélange maître de colorant avec un rapport de mélange dans la plage de 70:20:10 à 20:70:10 ; ou
- un mélange de polyéthylène moyenne densité (MDPE) et de polyéthylène basse densité linéaire (LLDPE) avec un rapport de mélange dans la plage de 70:30 à 30:70 ; ou
- un mélange de polyéthylène haute densité (HDPE) et de polyéthylène basse densité linéaire (LLDPE) avec un rapport de mélange de 50:50.

9. Film stratifié multicouche selon la revendication 7, dans lequel la deuxième couche d'étanchéité est :
- un mélange de polyéthylène moyenne densité (MDPE) et de polyéthylène basse densité linéaire (LLDPE) avec un rapport de mélange dans la plage de 70:30 à 30:70 ; ou
- un polyéthylène moyenne densité (MDPE).

10. Film stratifié multicouche selon l'une quelconque des revendications 1, 3, 4 et 8, dans lequel le mélange-maître de colorant est choisi dans le groupe constitué par le dioxyde de titane (TiO₂), le disulfure de zinc (ZnS₂), l'oxyde de zinc (ZnO), le sulfate de baryum (BaSO₄) et le carbonate de calcium (CaCO₃), de préférence
le mélange-maître de colorant est le dioxyde de titane (TiO₂) ou le carbonate de calcium (CaCO₃), de préférence le mélange-maître de colorant a un chargement de dioxyde de titane (TiO₂) dans la plage de 50 % à 75 % ou a un chargement de carbonate de calcium (CaCO₃) dans la plage de 40 % à 65 % avec une granulométrie dans la plage de 1 µm et 20 µm.

11. Film stratifié multicouche selon la revendication 1, dans lequel la première couche de liaison coextrudée comprend une couche primaire choisie dans le groupe constitué d'acide éthylène acrylique (EAA) et d'acide éthylène méthacrylique (EMAA) et une couche secondaire constituée de polyéthylène basse densité linéaire (LLDPE), dans lequel la couche primaire est adjacente à la première couche d'aluminium et la couche secondaire est en contact avec la couche de film imprimable.

12. Film stratifié multicouche selon la revendication 1, dans lequel la deuxième couche de liaison monoextrudée est constituée d'EAA ou d'EMAA qui est adjacente à la première couche d'aluminium et à la deuxième couche d'aluminium.

13. Film stratifié multicouche selon la revendication 1, dans lequel la troisième couche de liaison coextrudée comprend une couche primaire choisie dans le groupe constitué d'acide éthylène acrylique (EAA) et d'acide éthylène méthacrylique (EMAA) et une couche secondaire constituée de polyéthylène basse densité linéaire (LLDPE), dans lequel la couche primaire est adjacente à la couche d'aluminium et la couche secondaire est en contact avec la couche d'étanchéité.

14. Film stratifié multicouche selon la revendication 1, dans lequel la première couche d'aluminium ou la deuxième couche d'aluminium comprend une feuille d'aluminium recuit doux constituée d'un alliage de fer selon un pourcentage en poids dans la plage de 0,6 % à 1,0 % de ladite feuille et de silicium selon un pourcentage en poids dans la plage de 0,5 % à 0,9 % de ladite feuille.

15. Film stratifié multicouche selon la revendication 1, ledit film stratifié multicouche comprenant :
a. une couche de film imprimable ayant une épaisseur dans la plage de 60 à 80 µm ;
b. une première couche de liaison coextrudée ayant une épaisseur dans la plage de 20 à 40 µm ;
c. une première couche d'aluminium ayant une épaisseur dans la plage de 9 à 20 µm ;
d. une deuxième couche de liaison monoextrudée ayant une épaisseur dans la plage de 20 à 40 µm ;
e. une deuxième couche d'aluminium ayant une épaisseur dans la plage de 9 à 20 µm ;
f. une troisième couche de liaison coextrudée ayant une épaisseur dans la plage de 20 à 40 µm ; et
g. une couche d'étanchéité ayant une épaisseur dans la plage de 60 à 80 µm.

16. Procédé de fabrication du film stratifié multicouche selon la revendication 1, ledit procédé comprenant les étapes de :
a. obtention d'une couche de film imprimable et d'une couche d'étanchéité ;
b. mise en contact de la couche de film imprimable avec une première couche de liaison coextrudée comprenant un mélange d'EAA et de polyéthylène basse densité (LDPE), et une première couche d'aluminium, pour obtenir un composite semi-stratifié ;
c. mise en contact du composite semi-stratifié avec une deuxième couche de liaison coextrudée constituée d'EAA, et une deuxième couche d'aluminium pour obtenir un substrat semi-stratifié ;
d. mise en contact du substrat semi-stratifié avec une troisième couche de liaison coextrudée comprenant de l'EAA et un polyéthylène basse densité, et une couche d'étanchéité, pour obtenir un film stratifié multicouche préfabriqué ; et
e. refroidissement et compression du film stratifié multicouche préfabriqué pour obtenir le film stratifié multicouche.
